# FASCICULE DE BREVET EUROPEEN

(11) **EP 3 601 747 B1**
(45) Date de publication et mention de la délivrance du brevet: **19.10.2022**
(21) Numéro de dépôt: 18715203.8
(22) Date de dépôt: 16.03.2018
(51) Int. Cl.: F01D 25/16, F02C 7/06, F02C 7/32

(54) **RELAIS D'ACCESSOIRES POUR MOTEUR A TURBINE A GAZ**
ANBAUGERÄTEGETRIEBE FÜR EINEN GASTURBINENMOTOR
ACCESSORY GEARBOX FOR A GAS TURBINE ENGINE

(30) Priorité: 27.03.2017 FR 1752530
(43) Date de publication de la demande: 05.02.2020
(73) Titulaire: Safran Transmission Systems, 92700 Colombes (FR)
(72) Inventeur: MORELLI, Boris, Pierre, Marcel, 77550 Moissy-Cramayel (FR)
(74) Mandataire: Gevers & Orès
(86) Numéro de dépôt international: PCT/FR2018/050642
(87) Numéro de publication internationale: WO 2018/178538

(56) Documents cités:
- EP-A1- 1 898 072
- EP-A1- 3 548 709
- WO-A1-2012/175884
- WO-A2-2011/148078
- FR-A1- 3 009 045
- FR-A1- 3 018 860

## Description

### Domaine de l'invention

Le domaine de la présente invention est celui des turbomachines, notamment celui des moteurs à turbine à gaz destinés à la propulsion des aéronefs. L'invention porte sur les boîtiers d'entraînement des équipements accessoires associés à ces turbomachines, connus généralement sous la dénomination de relais d'accessoires ou sous la dénomination anglaise « accessory gear box » et son acronyme AGB.

### Etat de la technique

L'état de la technique comprend notamment les demandes de brevet publiées sous les numéros WO-A2-2011/148078 et FR-A1-3 009 045.

Une partie de l'énergie générée par le moteur est utilisée pour entraîner différents équipements de ce dernier. La puissance requise est prélevée mécaniquement, généralement sur l'arbre du corps haute pression du moteur à turbine à gaz, par un arbre de prise de mouvement qui est relié au fût du pignon d'entrée dans le relais d'accessoires. Le relais est monté sur le carter du moteur et il regroupe un certain nombre d'équipements ou accessoires qu'il supporte ; ce sont par exemple un générateur électrique, un alternateur, des pompes hydrauliques à carburant et à huile, un démarreur, etc.

Le relais comprend un boîtier de forme allongée à l'intérieur duquel sont montées des roues d'engrenage formant un train d'engrenages entraînant les équipements. Ces roues comportent un fût ou corps tubulaire apte à être relié à l'arbre d'entraînement d'un équipement. Une des roues est reliée également à l'arbre d'entrée du relais. Les différents appareils entraînés par le relais sont montés directement sur le boîtier, et les entraînements associés passent au travers de la paroi du boîtier par des ouvertures appropriées. Les roues constituant le train d'engrenages à l'intérieur du boîtier sont généralement à axes parallèles entre eux. Selon l'art antérieur connu du présent déposant, les fûts des pignons sont supportés d'un côté, par la paroi du boîtier qui est opposée à celle qui comprend l'ouverture au travers de laquelle l'équipement est entraîné, et de l'autre par la paroi comprenant l'ouverture ou bien un couvercle rapporté sur la paroi. En règle générale, le fût des pignons de la roue d'engrenage est porté d'une part par la bague extérieure d'un roulement à rouleaux ou à billes fixé sur la paroi de fond non découpée du boîtier et d'autre part par la bague externe d'un roulement à billes ou à rouleaux fixé sur le couvercle associé à l'accessoire. La denture d'engrènement de la roue d'engrenage est quant à elle située entre les deux roulements.

Le présent déposant a déjà proposé des améliorations concernant ce type de relais d'accessoires, décrites par exemple dans les demandes WO-A1-2012/175884 ou EP-A1-1 898 072.

Un tel agencement présente un certain encombrement dans la direction des axes des engrenages. Dans le cadre de l'amélioration continue de ses produits, le présent déposant souhaite réduire l'encombrement selon ladite direction. Il est à noter que les roulements à rouleaux ont une capacité de désalignement qui impose un entraxe minimum, cet entraxe limitant la possibilité de réduire l'épaisseur des relais. A moins d'augmenter les capacités de désalignement des rouleaux et donc de diminuer leur capacité de charge, une solution différente du montage doit être trouvée. C'est l'objectif que s'est fixé le présent déposant qui a déposé la demande de brevet FR-A1-3 018 860.

La demande FR-A1-3 018 860 décrit un relais d'accessoires dans lequel une roue d'engrenage est supportée par un seul palier à roulement. La roue d'engrenage comprend un voile pourvu d'une denture à sa périphérie, le voile étant disposé majoritairement dans le plan médian du palier à roulement. Le palier à roulement comprend une bague fixe radialement intérieure et montée sur un axe solidaire du boîtier et une bague mobile solidaire de la roue.

Cependant, le diamètre du palier à roulement est limité par le diamètre de la denture. En effet, étant donné que la denture s'étend autour du palier à roulement (dont la bague mobile est reliée à la denture par le voile de la roue), le palier ne peut pas avoir un diamètre égal ou supérieur à celui de la denture.

Par ailleurs, la dimension radiale du voile, entre sa périphérie interne et sa périphérie externe, est faible avec cette solution, ce qui se traduit par une rigidité importante du voile et de la roue.

La présente invention propose un perfectionnement à cette technologie, qui est simple, efficace et économique.

### Exposé de l'invention

Conformément à l'invention, on parvient à cet objectif avec un relais d'accessoires apte à entraîner des équipements accessoires d'un moteur à turbine à gaz, tel qu'un moteur d'aéronef, comprenant un boîtier et une pluralité de roues d'engrenage à l'intérieur du boîtier, le boîtier comprenant des moyens pour la fixation des équipements accessoires sur le boîtier et pour leur entraînement par les roues d'engrenages au travers d'ouvertures dans le boîtier, les roues comportant chacune un corps tubulaire et un voile annulaire externe comportant une denture périphérique externe, les roues étant supportées dans le boîtier par des paliers, au moins une desdites roues d'engrenage étant supportée par un seul palier, caractérisé en ce que ce palier comprend une bague fixe radialement extérieure par rapport à un axe A de rotation de la roue et montée dans un alésage du boîtier, et une bague mobile radialement intérieure par rapport à l'axe A et montée sur le corps de la roue, ledit palier étant écarté axialement d'un plan perpendiculaire à l'axe A de la roue et passant par la périphérie interne du voile de cette roue.

Le palier, de préférence à roulement, est de préférence apte à reprendre les moments perpendiculaires à l'axe de rotation de la roue d'engrenage ainsi que les charges axiales et radiales.

Grâce à l'utilisation d'un palier à roulement présentant cette propriété, on assure le bon fonctionnement du relais tout en permettant de réduire son épaisseur car le montage des roues est plus compact et n'est plus imposé par un entraxe minimum. De plus, le diamètre du palier à roulement n'est pas limité par celui de la denture, ce qui est avantageux. Par ailleurs, la dimension radiale du voile n'est pas limitée par le positionnement du palier à roulement, et peut avoir des formes variées optimisant sa rigidité.

Le relais d'accessoires selon l'invention peut comprendre une ou plusieurs des caractéristiques suivantes, prises isolément les unes des autres, ou en combinaison les unes avec les autres :
- le palier est du type à roulement et par exemple à double rangée de billes et à contact oblique; en variante, il peut s'agir d'un palier lisse, un palier à rouleaux, un palier double conique, etc.,
- le palier de guidage de la roue est situé du côté opposé à l'ouverture du boîtier alignée avec l'axe A de cette roue,
- le corps est pourvu de cannelures internes ; en variante, le corps pourrait être dépourvu de cannelures,
- lesdites cannelures sont traversées par ledit plan ; en variante, elles pourraient être axialement décalées par rapport à ce plan,
- la bague extérieure comprend un rebord annulaire externe appliqué et fixé par des moyens de fixation sur le boîtier,
- la bague extérieure comprend un rebord annulaire interne appliqué et fixé par des moyens de fixation sur le boîtier,
- ledit plan passe par la denture externe du voile ; en variante, ce plan pourrait être décalé axialement de cette denture,
- le voile a une forme non plane ; il peut bien entendu en variante avoir une forme plane.

La présente invention concerne également une turbomachine équipée d'un relais d'accessoires tel que décrit ci-dessus.

### Brève description des figures

D'autres caractéristiques et avantages ressortiront de la description qui suit d'un mode de réalisation non limitatif de l'invention en référence aux dessins annexés sur lesquels :
La figure 1 représente en coupe axiale une vue partielle d'un relais d'accessoires de l'art antérieur ;
La figure 2 représente une vue en coupe axiale d'une partie d'un relais d'accessoires conforme à l'invention ;
Les figures 3a à 3f représentent des vues en coupe axiale de variantes de réalisation de relais d'accessoires conformes à l'invention.

### Description détaillée d'un mode de réalisation de l'invention

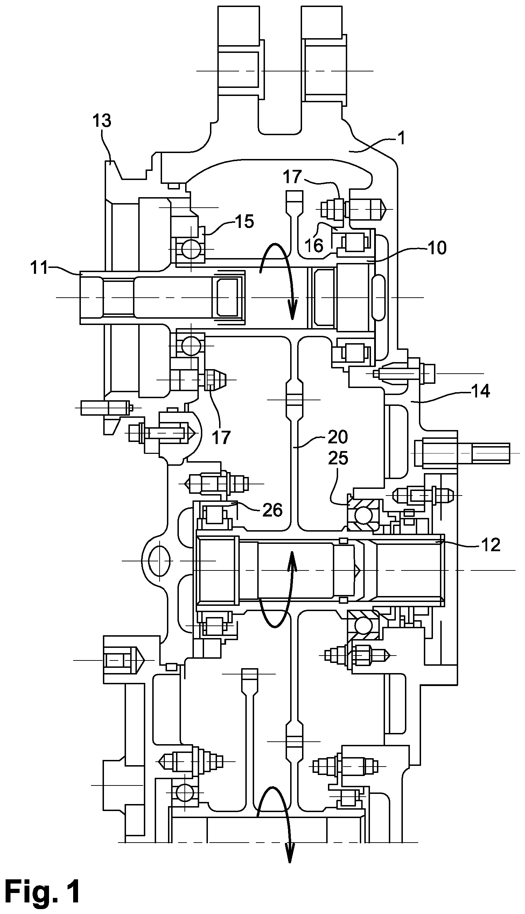

La figure 1 montre en coupe une extrémité d'un relais d'accessoires d'une turbomachine selon l'art antérieur. Il est constitué d'un boîtier, généralement venu de fonderie puis repris en usinage, dans lequel sont montés des engrenages destiné à recevoir les pignons ou roues d'engrenage servant à l'entraînement d'un des accessoires rattachés au relais d'accessoires. Sur la figure sont représentées deux roues d'engrenage, la première 10 est rattachée à l'arbre d'entrée 11 dans l'AGB et la seconde 20 comporte des cannelures internes 12 permettant l'entraînement d'un accessoire.

Une fois que les roues d'engrenage sont en place dans le boîtier 1, les ouvertures par lesquelles passent les axes d'entraînement des accessoires sont refermées par des couvercles de façon à assurer l'étanchéité de l'ensemble et à assurer le portage d'un des roulements de l'arbre de la roue d'engrenage. Dans le cas du premier engrenage 10, un couvercle 13 referme l'ouverture située du côté de l'arbre d'entrée 11. Pour la roue d'engrenage 20, un couvercle 14 referme l'ouverture que traverse le premier arbre d'entraînement 12.

On remarque sur les engrenages qu'ils sont portés par des roulements : un roulement à billes maintenu en place par le couvercle refermant l'ouverture permettant le passage de l'arbre d'entraînement correspondant et un roulement à rouleaux qui est fixé sur la paroi de fond correspondante du boîtier 1, c'est-à-dire la paroi opposée à celle dans laquelle est pratiquée l'ouverture de passage de l'arbre correspondant.

La bague extérieure 15 du roulement à billes du premier engrenage 10 est ainsi fixée sur le couvercle d'arbre d'entrée 13 par des moyens du type goujons-écrous alors que la bague extérieure 16 du roulement à rouleaux de ce même premier engrenage est fixée directement sur le fond du boîtier 1, là encore par des moyens d'assemblage 17 du type goujons-écrous. Il en est de même pour le second engrenage, dont la bague extérieure 25 de son roulement à billes est fixée sur le premier couvercle d'entraînement d'accessoires 14 alors que celle 26 de son roulement à rouleaux est fixée sur le fond correspondant du boîtier 1.

Selon cet art antérieur, les roues d'engrenage sont ainsi placées entre les deux roulements par lesquels l'arbre est supporté. Cette disposition permet de répartir la charge entre les roulements mais impose un écartement minimum entre les deux roulements et est sensible au désalignement entre les diamètres de centrage des roulements du carter et du couvercle. Dans d'autres cas d'application les lignes peuvent utiliser un assemblage roulement à rouleaux/ roulement à rouleaux.

On constate néanmoins que cet agencement oblige à prévoir un écartement minimum entre les parois du boîtier pour pouvoir loger la roue et les deux paliers à roulement de part et d'autre de la roue.

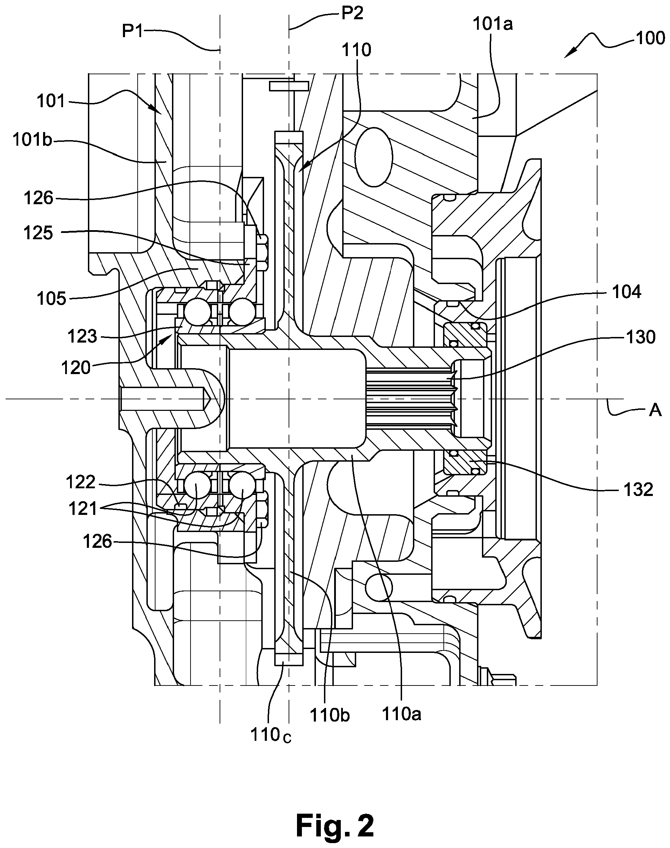

La figure 2 montre un relais d'accessoires conforme à l'invention.

Le boîtier 101 du relais d'accessoires 100 conforme à l'invention et dont on ne voit qu'une partie au niveau d'une roue d'engrenage 110, comprend deux parois 101a et 101b parallèles et espacées l'une de l'autre pour le logement de la roue 110. Une paroi 101a est pourvue d'une ouverture 104 par laquelle il est possible d'accéder à la roue 110. Un alésage 105 est prévu dans la paroi de fond 101b, du côté opposé à l'ouverture 104 de l'autre paroi 101a et en vis-à-vis de celle-ci.

La roue d'engrenage 110 est montée à rotation dans l'alésage 105 par l'intermédiaire d'un palier à roulement 120 à double rangée de billes et à contact oblique, comportant une bague extérieure 122 et une bague intérieure 123 entre lesquelles est disposée la double rangée de billes 121.

La bague extérieure 122 est par exemple monobloc. Selon ce mode de réalisation, elle comprend une partie centrale et deux parties latérales formant deux pistes de roulement intérieures. Ces pistes sont réalisées sous la forme de gorges de roulement, de révolution autour de l'axe du roulement et orientées sensiblement dos-à-dos. Les gorges sont de section radiale en arc-de-cercle présentant leur concavité radialement vers l'axe A du roulement et axialement chacune latéralement vers l'extérieur du roulement du côté de la partie latérale correspondante. En variante, le roulement pourrait être double et conique.

La bague extérieure 122 comprend ici à une extrémité axiale un rebord annulaire externe 125 qui s'étend radialement vers l'extérieur et qui est appliqué axialement contre le bord circonférentiel libre de l'alésage 105. Ce rebord 125 comprend des orifices axiaux de passage de vis 126 de fixation du palier au boîtier 101.

La bague intérieure 123 comprend ici deux demi-bagues intérieures, disposées côte-à-côte et axialement pré-chargées l'une contre l'autre en service. Chacune des demi-bagues intérieures comporte une piste de roulement extérieure. Les demi-bagues sont symétriques par rapport à un plan transversal médian. Les deux demi-bagues sont pré-chargées axialement l'une contre l'autre, au montage du roulement en configuration d'utilisation. Les pistes de roulement extérieures ont la forme de gorges de roulement également de révolution autour de l'axe du roulement. Elles sont de section radiale en arc-de-cercle et la concavité de chacune est tournée radialement vers l'extérieur du roulement et axialement vers la piste de roulement extérieure de l'autre demi-bague intérieure. Les pistes de roulement extérieures de la bague intérieure 123 sont ainsi sensiblement disposées face-à-face.

Les billes 121 d'une rangée sont montées en contact roulant entre la gorge de roulement extérieure d'une première demi-bague intérieure et la gorge de roulement intérieure en regard sur la bague extérieure 122, tandis que les billes 121 de l'autre rangée sont montées en contact roulant entre la gorge de roulement extérieure de la seconde demi-bague intérieure et la gorge de roulement intérieure en regard sur la bague extérieure 122.

Les billes 121 sont ainsi montées à contact oblique, par rapport au plan médian du roulement et qui correspond au plan de contact axial des demi-bagues intérieures, lorsque le roulement est pré-chargé axialement au montage, en configuration d'utilisation. Le cas échéant des cages à billes sont prévues entre les deux bagues pour retenir les billes entre les pistes de roulement.

Dans l'exemple représenté, le plan médian P1 de symétrie du roulement à double rangée de bille est écarté axialement du plan P2 du voile 110c de la roue 110, qui est perpendiculaire à l'axe A et passe par la périphérie interne du voile de la roue 110.

La roue 110 comprend essentiellement un corps tubulaire 110a d'axe A et le voile 110b qui s'étend radialement vers l'extérieur depuis le corps et qui porte à sa périphérie une denture d'engrènement 110c. Le voile 110b est ici plan et s'étend donc intégralement dans le plan P2.

Le voile 110c est disposé sensiblement au milieu du corps 110a, le long de sa dimension axiale.

La portion du corps 110a, opposé à l'ouverture 104, est engagée au moins partiellement dans l'alésage 105 et guidée dans celle-ci par le palier 105 dont la bague intérieure 123 est donc montée directement sur le corps.

La portion du corps 110a, située du côté de l'ouverture 104, comprend des cannelures internes 130 en vue de la solidarisation en rotation de la roue à un arbre d'un équipement ou accessoire. Cette portion est entourée par un anneau d'étanchéité 132 monté dans l'ouverture 104.

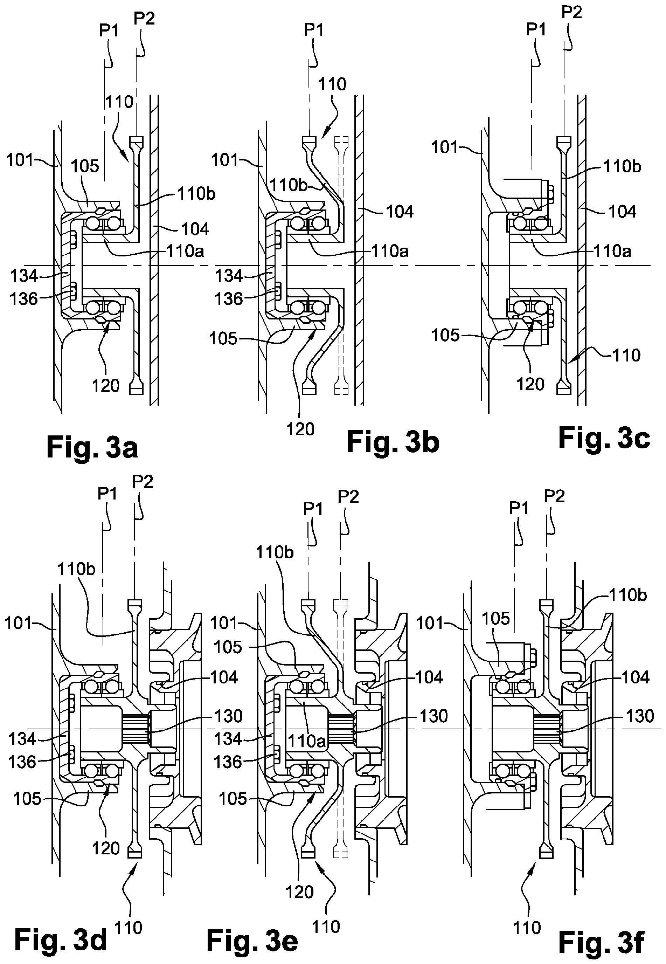

Les figures 3a à 3f montrent des variantes de réalisation de l'invention.

Les roues 110 des figures 3a à 3c diffèrent de celle 110 de la figure 2 notamment en ce qu'elles ne comportent pas de cannelures. Son corps 110a s'étend axialement que d'un côté du voile 110b, du côté opposé à l'ouverture 104 du boîtier 101. Au contraire, les roues 110 des figures 3d à 3f comprennent des cannelures 130. Celles-ci sont toutefois traversées par le plan P2 précité.

Dans les figures 3a, 3c, 3d, et 3f, les voiles sont plans et contenus dans le plan P2. Au contraire, dans les figures 3b et 3e, les voiles comprennent une partie périphérique interne située dans le plan P2 et une partie périphérique externe reliée à la denture située dans le plan P1.

Le palier 120 des figures 3c et 3f est similaire à celui de la figure 2. Dans les figures 3a, 3b, 3d et 3e, la bague intérieure du palier est similaire à celle de la figure 2 mais sa bague extérieure diffère par le fait qu'elle comprend, à son extrémité axiale située du côté opposé à l'ouverture 104, un rebord annulaire interne 134 sensiblement radial qui est appliqué axialement contre le fond de l'alésage et est fixé à celui-ci par des vis 136.

L'agencement présenté ci-dessus permet de réduire significativement la largeur du boitier de la transmission de puissance en utilisant un ensemble de roues d'engrenage supportées par des roulements uniques. Ces roulements permettent d'absorber à la fois les efforts axiaux, radiaux et les moments de basculement autour d'axes perpendiculaires à l'axe de rotation de la roue.

Le palier à roulement représenté sur les figures est à double rangée de billes à contact oblique. Selon un autre mode de réalisation non représenté le palier est à double rangée de rouleaux à contacts obliques.

## Revendications

1. Relais d'accessoires (100) apte à entraîner des équipements accessoires d'un moteur à turbine à gaz, tel qu'un moteur d'aéronef, comprenant un boîtier (101) et une pluralité de roues d'engrenage (110) à l'intérieur du boîtier,
le boîtier comprenant des moyens pour la fixation des équipements accessoires sur le boîtier et pour leur entraînement par les roues d'engrenages au travers d'ouvertures (104) dans le boîtier,
les roues comportant chacune un corps tubulaire (110a) et un voile annulaire externe (110b) comportant une denture périphérique externe (110c), les roues étant supportées dans le boîtier par des paliers (120),
au moins une (110) desdites roues d'engrenage étant supportée par un seul palier (120),
**caractérisé en ce que** ce palier (120) comprend une bague fixe (122) radialement extérieure par rapport à un axe A de rotation de la roue et montée dans un alésage (105) du boîtier, et une bague mobile (123) radialement intérieure par rapport à l'axe A et montée sur le corps de la roue, ledit palier étant écarté axialement d'un plan (P2) perpendiculaire à l'axe A de la roue et passant par la périphérie interne du voile de cette roue.

2. Relais d'accessoires (100) selon la revendication 1, dans lequel ledit palier (120) est du type à roulement (120) et par exemple à double rangée de billes (121) et à contact oblique.

3. Relais d'accessoires (100) selon l'une des revendications précédentes, dans lequel ledit palier (120) de guidage de la roue est situé du côté opposé à l'ouverture (104) du boîtier alignée avec l'axe A de cette roue.

4. Relais d'accessoires (100) selon l'une des revendications précédentes, dans lequel le corps (110a) est pourvu de cannelures internes (130).

5. Relais d'accessoires (100) selon la revendication 4, dans lequel lesdites cannelures (130) sont traversées par ledit plan (P2).

6. Relais d'accessoires (100) selon l'une des revendications précédentes, dans lequel la bague extérieure (122) comprend un rebord annulaire externe (125) appliqué et fixé par des moyens de fixation sur le boîtier.

7. Relais d'accessoires (100) selon l'une des revendications 1 à 5, dans lequel la bague extérieure (122) comprend un rebord annulaire interne (134) appliqué et fixé par des moyens de fixation sur le boîtier.

8. Relais d'accessoires (100) selon l'une des revendications précédentes, dans lequel ledit plan (P2) passe par la denture externe (110c) du voile (110b).

9. Relais d'accessoires (100) selon l'une des revendications précédentes, dans lequel le voile (110b) a une forme non plane.

10. Turbomachine équipée d'un relais d'accessoires (100) conforme à l'une des revendications précédentes.

## Patentansprüche

1. Zubehörrelais (100), das geeignet ist, Zubehörausstattungen eines Gasturbinenmotors, wie etwa einen Luftfahrzeugmotor, anzutreiben, umfassend ein Gehäuse (101) und eine Vielzahl von Zahnrädern (110) im Inneren des Gehäuses,
wobei das Gehäuse Mittel zur Befestigung der Zubehörausstattungen an dem Gehäuse und zu deren Antrieb durch die Zahnräder durch Öffnungen (104) im Gehäuse hindurch umfasst,
wobei die Räder jeweils einen rohrförmigen Körper (110) und einen äußeren ringförmigen Schlag (110b) umfassen, umfassend eine äußere Umfangsverzahnung (110c), wobei die Räder im Gehäuse von Lagern (120) getragen werden, wobei mindestens eines (110) der Zahnräder von einem einzigen Lager (120) getragen wird,
**dadurch gekennzeichnet, dass** dieses Lager (120) einen festen Ring (122), der in Bezug auf eine Drehachse A des Rads radial außenliegend und in einer Bohrung (105) des Gehäuses montiert ist, und einen beweglichen Ring (123), der in Bezug auf die Achse A radial innenliegend und auf dem Körper des Rads montiert ist, umfasst, wobei das Lager von einer Ebene (P2) senkrecht zur Achse A des Rads axial beabstandet ist und durch den Innenumfang des Schlags dieses Rads verläuft.

2. Zubehörrelais (100) nach Anspruch 1, wobei das Lager (120) vom Wälzlager- (120) und zum Beispiel vom zweireihigen Kugellager- (121) und Schrägkugellagertyp ist.

3. Zubehörrelais (100) nach einem der vorstehenden Ansprüche, wobei sich das Lager (120) zur Führung des Rads auf der gegenüberliegenden Seite an der Öffnung (104) des Gehäuses befindet, die mit der Achse A dieses Rads ausgerichtet ist.

4. Zubehörrelais (100) nach einem der vorstehenden Ansprüche, wobei der Körper (110a) mit inneren Nuten (130) versehen ist.

5. Zubehörrelais (100) nach Anspruch 4, wobei die inneren Nuten (130) von der Ebene (P2) durchquert werden.

6. Zubehörrelais (100) nach einem der vorstehenden Ansprüche, wobei der äußere Ring (122) einen ringförmigen Außenrand (125) umfasst, der durch Befestigungsmittel an dem Gehäuse angebracht und fixiert ist.

7. Zubehörrelais (100) nach einem der Ansprüche 1 bis 5, wobei der äußere Ring (122) einen ringförmigen Innenrand (134) umfasst, der durch Befestigungsmittel an dem Gehäuse angebracht und fixiert ist.

8. Zubehörrelais (100) nach einem der vorstehenden Ansprüche, wobei die Ebene (P2) durch die Außenverzahnung (110) des Schlags (110b) verläuft.

9. Zubehörrelais (100) nach einem der vorstehenden Ansprüche, wobei der Schlag (110b) eine nicht ebene Form aufweist.

10. Turbomaschine, die mit einem Zubehörrelais (100) gemäß einem der vorstehenden Ansprüche ausgestattet ist.

## Claims

1. An accessory relay (100) suitable for driving accessory equipment of a gas turbine engine, such as an aircraft engine, comprising a housing (101) and a plurality of gear wheels (110) inside the housing,
the housing including means for fixing the accessory equipment to the housing and for driving it by the gear wheels through openings (104) in the housing,
the wheels each comprising a tubular body (110a) and an outer annular web (110b) comprising an outer peripheral gear teeth (110c), the wheels being supported in the housing by bearings (120), at least one (110) of said gear wheels being supported by a single bearing (120),
**characterized in that** this bearing (120) comprises a fixed ring (122) radially outer with respect to an axis A of rotation of the wheel and mounted in a bore (105) of the housing, and a movable ring (123) radially inner with respect to the axis A and mounted on the body of the wheel, said bearing being spaced apart axially from a plane (P2) perpendicular to the axis A of the wheel and passing through the inner periphery of the web of this wheel.

2. The accessory relay (100) according to claim 1, wherein said bearing (120) is of the rolling element type (120) and for example with double row of balls (121) and angular contact.

3. The accessory relay (100) according to one of the preceding claims, wherein said bearing (120) for guiding the wheel is located on the side opposite the opening (104) of the housing aligned with the axis A of this wheel.

4. The accessory relay (100) according to one of the preceding claims, wherein the body (110a) is provided with inner splines (130).

5. The accessory relay (100) according to claim 4, wherein said splines (130) are traversed by said plane (P2).

6. The accessory relay (100) according to one of the preceding claims, wherein the outer ring (122) includes an outer annular flange (125) applied and fixed via fixing means to the housing.

7. The accessory relay (100) according to one of claims 1 to 5, wherein the outer ring (122) comprises an inner annular flange (134) applied and fixed via fixing means to the housing.

8. The accessory relay (100) according to one of the preceding claims, wherein said plane (P2) passes through the outer gear teeth (110c) of the web (110b).

9. The accessory relay (100) according to one of the preceding claims, wherein the web (110b) has a non-planar shape.

10. Turbomachinery equipped with an accessory relay (100) according to one of the preceding claims.
